# EUROPEAN PATENT SPECIFICATION

(11) **EP 1 862 527 B1**
(45) Date of publication and mention of the grant of the patent: **19.01.2011**
(21) Application number: 06388037.1
(22) Date of filing: 30.05.2006
(51) Int. Cl.: C10G 1/08, C10G 29/06, B01J 3/00, C01B 3/32, C02F 11/08, C10G 31/08, C10G 1/06

(54) **A process for the production of light hydrocarbons from natural bitumen or heavy oils**
Verfahren zur Herstellung von leichten Kohlenwasserstoffen aus natürlichen Bitumen oder Schwerölen
Procédé de production d'hydrocarbures légers à partir de bitume naturel ou d'huiles lourdes

(43) Date of publication of application: 05.12.2007
(73) Proprietor: Environmental Consulting Catalysts & Processes for a Sustainable Development, 25588 Mehlbek (DE)
(72) Inventor: Andersen, Kjeld, 25588 Mehlbek (DE)
(74) Representative: Christensen, Bent

(56) References cited:
- EP-A- 0 423 960
- EP-A1- 0 419 265
- EP-B1- 0 402 405
- GB-A- 2 310 865
- JP-A- 10 251 655
- US-B1- 6 325 921

## Description

### Technical field of the invention

The present invention relates to a catalytic process for the production from heavy hydrocarbons (natural bitumen or heavy oils) of light hydrocarbons having an API (American Petroleum Institute) gravity of at least 25° and a reduced content of metals.

### Background of the invention

Natural bitumen (often called tar sands or oil sands) and heavy oil differ from light oils by their high viscosity (resistance to flow) at reservoir temperatures, high density (low API gravity), and significant contents of nitrogen, oxygen, and sulfur compounds as well as heavy-metal contaminants. They resemble the residuum from the refining of light oil. Most bitumen or heavy oil is found at the margins of geologic basins and is thought to be the residue of former light oil that has lost its light-molecular-weight components through degradation by bacteria, water-washing, and evaporation.

The estimated volume of technically recoverable heavy oil (434 billion barrels) and natural bitumen (651 billion barrels) in known accumulations is about equal to the remaining conventional (light) oil reserves of the earth.

Very heavy crude oil deposits, such as the tar sand formations found in places like Canada and Venezuela, contain trillions of barrels of a very heavy, viscous petroleum, commonly referred to as bitumen. The bitumen has an API gravity typically in the range of from 5°-10° and a viscosity, at formation temperatures and pressures, which may be as high as a million centipoise. The hydrocarbonaceous molecules making up the bitumen are low in hydrogen and have a resin plus asphaltenes content as high as 70% as well as high contents of heavy metals. Thus, Orinoco bitumen is e.g. known to have a 900ppm content of nickel plus vanadium. This makes the bitumen difficult to upgrade.

Conversion of heavy oils is commercially very significant and enjoys increasingly attention in the petroleum industry due to the exhaustion of resources of normal crude oils. A process for the production of light hydrocarbons with low heavy metal contents in high yields from natural bitumen would therefore be of significant importance.

A number of alternative physical and chemical routes have been and are still being developed for converting heavy hydrocarbon materials into lighter liquid and gaseous fuels. Among the approaches are physical separation processes such as vacuum distillation, steam distillation, and solvent deasphalting, various thermal conversion processes such as visbreaking, delayed coking, fluid coking and coke gasification, catalytic processes, such as hydrotreating, hydrorefining and hydrocracking, as well as multistage catalytic and non-catalytic processes.

Each of these approaches has one or more drawbacks.

In physical separation processes, such as vacuum distillation, steam distillation and solvent deasphalting, a liquid hydrocarbon fraction is recovered in low yield, but the asphaltene and resinous materials are not converted into a desired product and must be disposed of separately.

The various thermal conversion processes, such as visbreaking, delayed coking, fluid coking and coke gasification require high temperatures above 500°C and generate a low quality by-product coke. In coke gasification, it is necessary to treat heavy hydrocarbons with steam and oxygen at high temperatures to produce a product gas which must be utilized locally, and a limited yield of lighter liquid hydrocarbon products.

Recently, a thermal conversion process called the Eureka process, was disclosed in Chemical Engineering Progress, February 1981, pages 37-44 and in US patent No. 4,242,196. The Eureka process converts petroleum residues, such as mixtures of vacuum residues from Khafij crude oil or Iranian heavy crude oil, into a low sulfur petroleum oil and petroleum pitch by preheating the mixture of vacuum residues from about 450-520°C, feeding the preheated mixture to a fractionator and then to a charge heater at 500°C before stripping the thermally cracked low molecular weight hydrocarbons with superheated steam in a delayed coker reactor at 420-430°C under atmospheric pressure.

US patent No. 4,113,446 (Modell et al.) discloses the conversion of liquid or solid organic materials into high BTU gas with little or no formation of undesirable char or coke, when organic material is reacted with water at a temperature at or above the critical temperature of water and at or above the critical pressure of water to achieve the critical density of water. The process is conducted either in the presence or absence of a catalyst. Only gas and no liquid hydrocarbon fractions are recovered. International patent application No. WO 81/00855 (corresponding to US patent application Ser. No. 079,534, filed on Sept. 29, 1979 by M. Modell) discloses the conversion of organic solid or liquid material mixed with water (in the region of the critical density of water, i.e. densities of water from 0.2 to 0.7 g/cm³) at pressures from 200-2500atm and at temperatures from 374 to at least approximately 450°C to useful volatile organic liquids.

US Patent No. 3,983,027 (McCollum et al.) discloses a process for cracking, desulfurizing and demetallizing heavy hydrocarbon feedstocks, such as vacuum gas oil, tar sand oils and atmospheric residual oils to produce gases, liquids (heavy ends and light ends), and a solid residue by contacting the heavy hydrocarbons with a dense-water containing fluid at a temperature in the range of 349-400°C (660-752°F) and at a pressure in the range of 2500 to 4400 psig (170-299atm) in the absence of an externally supplied catalyst and hydrogen or other reducing gas. To produce a hydrocarbon product having an API gravity of 21° and a low (10ppm) nickel and vanadium content, the presence of alundum balls in the reaction zone at 400°C and 4100 psig (279atm) and extremely low flow rates (1 ml of tar sands and oil per hour) were required.

US patent No. 2,135,332 (Gary) discloses a process for the cracking of relatively heavy oil, such as reduced crude, other heavy oils of residual nature or a heavy gas oil consisting principally of constituents boiling above 700°F (371°C) to produce gases, liquids (lower boiling hydrocarbons of the gasoline range) and a solid or liquid residue including coke by admixing the heavy oil with a diluent, such as steam, low boiling hydrocarbon gases or fixed gases at temperatures in the range of 650-975°F (343-524°C) and at pressures as low as 300 lbs/sq in (20atm), preferably approximately 2,000-3,000 lbs/sq in (136-204atm). However, Gary does not suggest a method of converting heavy oil containing high metal values, e.g. nickel and vanadium, into a light hydrocarbon oil substantially free of such metals

US patent No. 6,325,921 (Andersen) discloses a method for catalytic removal of metals from heavy oils using supercritical water at temperatures between 300 and 550°C and at a pressure of between 100 and 300atm.

EP patent No. 0 402 405 (Andersen) discloses a catalytic process for the conversion of organic material into a gas by treating the organic material in near-critical water at a temperature of from 200-450°C and at a pressure of from 50-350atm.

JP 10251655 (Mitsubishi Materials Corp.) discloses a process for the treatment of coal and added cellulosic biomass or formic acid with supercritical water to produce an oil.

Thus, there is still a strong need for an industrially useful process for the exploitation of the vast reserves of natural bitumen and heavy oils having high contents of heavy-metal contaminants.

It is therefore the object of the present invention to provide a novel process for the production of light hydrocarbons having an API gravity of at least 25° and a content of metals of less than 10 ppm from heavy hydrocarbons.

Unexpectedly, it has now been found that this object can be obtained in critical or near-critical water by a heterogeneous catalytic process performed on heavy hydrocarbons to which a biomass is added in a reactor, wherein the catalyst is consisting of an element from the periodic system group 4b, and an element from the periodic system group 1a.

### Summary of the invention

The invention provides a novel, heterogeneous, catalytic process for the production of light hydrocarbons having an API gravity of at least 25°, and a content of metals of less than 10ppm from heavy hydrocarbons, comprising adding 5-50% by weight based on said heavy hydrocarbons of a biomass, treating said heavy hydrocarbons and biomass in critical or near-critical water at a pressure of from 220-300atm, and at a temperature from 340-380°C in a catalytic reactor, using as a catalyst an element from the periodic system group 4b, and an element from the periodic system group 1 a.

According to an embodiment of the invention, the catalytic element form the periodic system group 4b preferably is zirconium, especially in the form of its dioxide, and the catalytic element from the periodic system 1 a preferably is potassium, especially in the form of its carbonate.

According to a further embodiment of the invention, the pressure of the near-critical water preferably is from 220-245atm, and the temperature preferably is from 350-375°C.

According to a further embodiment of the invention, the biomass is any suitable biomass. As an example, the biomass may be selected from the group comprising straw, such as barley straw, rice shells, corn silage, sludge, semi-liquid manure, wood chips and the like, preferably in an amount from 5-20% by weight based on the said heavy hydrocarbons.

According to a further embodiment of the invention, potassium is added continuously during the process in an amount of from 0.1-10% by weight based on the heavy oil feed, preferably in an amount from 0.5 -5% by weight.

According to a further embodiment of the invention, the heavy hydrocarbon and the required amount of biomass are mixed in a stirred tank at a temperature of 100-140°C, preferably approximately120°C at ambient pressure, and pumped at a pressure of 225-250atm through a line in which the mixture of heavy hydrocarbon and biomass is combined and mixed with feed water being pumped at the same pressure, the combined mixture being heated to the requested reactor temperature of 370-380°C and then introduced into the reactor having a fixed bed catalyst, preferably as rings or another geometry causing as little pressure difference across the fixed bed catalyst as possible, the fixed bed catalyst being an element from the periodic system group 4b, preferably zirconium, and especially its dioxide, the other catalyst being an element from the periodic system group 1 a, preferably potassium, and especially potassium carbonate, which is introduced into the reactor through said feed water, the hot effluent from the reactor being passed through one or more heat exchangers for preheating the reactor feed and cooling the effluent, which is then subjected to pressure reduction, final cooling and phase separation.

According to a further embodiment, the feed water comprising the catalyst from the periodic system group 1A is added separately to the reactor.

### Brief description of the drawings

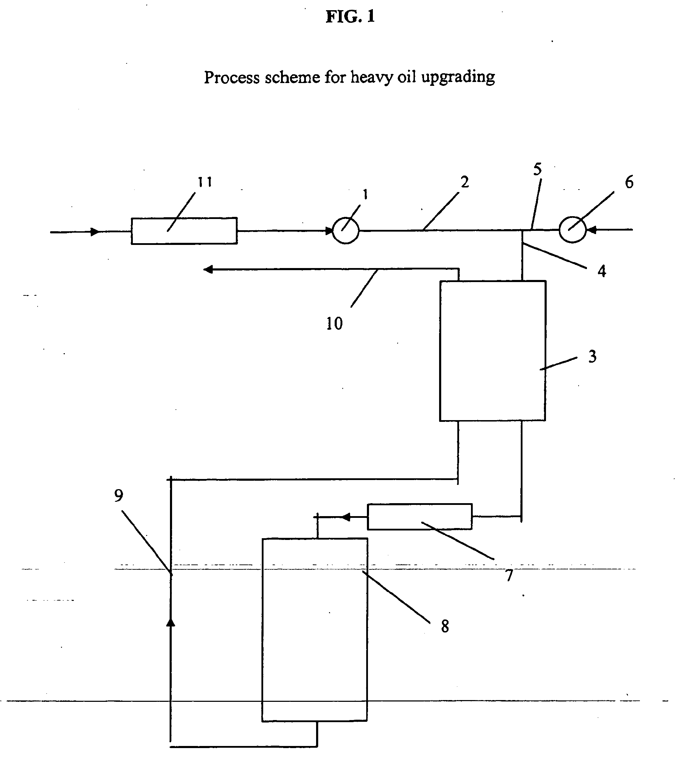

Fig. 1 represents a process scheme for upgrading heavy hydrocarbons in accordance with an embodiment of the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### Detailed description of the invention

The expression "supercritical fluid" as used herein defines a substance being at such temperature and pressure conditions that the fluid neither meets the definition of a liquid because it cannot be made to boil by decreasing the pressure at constant temperature nor a vapour because cooling at constant pressure will not cause it to condense. Water is a supercritical fluid above 374°C and 22MPa, 706°F and 3191psi. In general, supercritical fluids possess unique solvating and transport properties compared to liquids or gases. Supercritical fluids can have liquid-like densities, gas-like diffusivities, and compressibilities highly deviating from the behaviour of an ideal gas. Under supercritical conditions, solid solubility often is greatly enhanced with respect to solubility in the gas or liquid solvent. Supercritical water in particular has the ability to dissolve materials not normally soluble in liquid water or steam and also seems to promote some types of chemical reactions.

The expression "near-critical" as used herein means that temperature and pressure are just not sufficiently high to bring the fluid into a supercritical condition.

The expression "light oil" or "light hydrocarbon" as used herein means a conventional oil having an API gravity of at least 22° and a viscosity of less than 100 centipoises (cP).

The expression "heavy oil" as used herein means an asphaltic, dense (low API gravity), and viscous oil being chemically characterised by the content of asphaltenes which are very large molecules incorporating most of the sulfur and metals in the oil. The heavy oils as defined herein have an upper limit for API gravity of 22° and a viscosity of 100cP.

The "expression "extra-heavy oil" as used herein is that portion of the heavy oil having an API gravity of less than 10°.

The expressions "natural bitumen", "tar sand" and "oil sand" are interchangeable and as used herein mean a yet more dense oil than extra-heavy oil having a viscosity of more than 10,000cP.

The expression "heavy hydrocarbon" as used herein covers heavy oil, extra-heavy oil and natural bitumen.

The expression "API gravity" as used herein means a standard of the American Petroleum Institute. API gravity is computed as (141.5/specific gravity)-131.5. The specific gravity is the specific gravity of the oil at 60°F (15.56°C).

The expression "biomass" as used herein means any biological material. As nonlimiting examples, straw, such as barley straw, rice shells, corn silage, sludge, semi-liquid manure, wood chips and the like may be mentioned.

The expression "demetallization" as used herein means that heavy metals, e.g. vanadium and nickel found in high amounts in heavy hydrocarbons, are reduced to 10ppm or less.

The process for a heterogeneous, catalytic conversion of heavy hydrocarbons into light hydrocarbons accompanied by demetallization as well as elimination of organosulfur and organonitrogen compounds comprises heating said heavy hydrocarbons to 100-130°C. To these heavy hydrocarbons is added from 5-50% by weight of biomass or another suitable organic waste based on the weight of the heavy hydrocarbons. A pump 1 pressurizes the mixture of heavy hydrocarbons and biomass from 220-250atm, and the mixture is conveyed by line 2 to line 4. A feed water stream comprising a suitable amount of a catalyst from the periodic system group 1a is pressurized by pump 6 to the same pressure as the mixture of heavy hydrocarbons and biomass and is conveyed through line 5 at a temperature of 100-130°C to line 4, where the feed water is mixed with the mixture of heavy hydrocarbons and biomass. The combined mixture of heavy hydrocarbons, biomass, water and catalyst from the periodic system group 1 a is passed through a heat exchanger 3 to increase the temperature to 350-375°C by heat exchanging with hot effluent from the catalytic reactor 8. The hot heavy hydrocarbon, biomass and feed water comprising a catalyst from the periodic system group 1 a, are conveyed to the preheater 7 for further temperature increase, if required, and then to the inlet of the fixed bed catalytic reactor 8 forming a single reactive phase solution, the feed water being in a near-critical/supercritical condition. The reactor 8 comprises as the fixed bed catalyst an element selected from the periodic system group 4b.The fixed bed is in the form of rings or another geometry causing as little pressure difference across the fixed bed catalyst as possible. Alternatively, the feed water comprising a catalyst from the periodic system group 1a may be added separately to the reactor 8 to form the near-critical/supercritical phase. The near-critical/supercritical phase is then reacted with the heavy hydrocarbon and biological mass to produce lighter hydrocarbons. After the reaction, the effluent is passed from the reactor 8 through line 9 to reduce the pressure to ambient pressure and exchange the heat of the effluent with the feed in heat exchanger 3 to provide the feed with the required preheating temperature. The water phase of the effluent is separated from the other liquid product mainly consisting of lighter hydrocarbons having an API of above 20°. Said water phase with its content of water soluble organic compounds may be recycled back to the feed water preheater (not shown in the drawing). The effluent further comprises a gaseous product mainly consisting of hydrogen, at ambient conditions gaseous hydrocarbons and CO₂.

### Examples

### Batch test runs for comparison of heavy oil upgrading by addition of biomass

### Example according to the invention

### Properties of heavy oil feed.

Origin: Orinoco bitumen
API: 5°
Nickel: 110ppm
Vanadium: 720ppm
Simulated distillation: less than 5% by weight was boiling below 524°C
Autoclave volume: 1,000 cm³
Temperature: 375°C
Pressure: 225atm

### Description of batch test run

Boscan heavy crude oil, bitumen and the light hydrocarbons produced from this and some internal standards (gasoline, kerosene and diesel) were analyzed with a Hewlett-Packard Model No. 5880 gas chromatograph equipped with a flame ionization detector and a capillary splitter. Simulated distillation was performed in accordance with ASTM D2887.

The autoclave was filled with 3X3 mm zirconia tablets, then a mixture of 100 cm³ heavy oil and 10% by weight of saw dust which was preheated to 90°C, was poured into the autoclave. Finally, 200 cm³ containing 1% by weight of potassium as potassium carbonate was added to the autoclave. The autoclave was closed and pressure tested. Within a period of 40 min., it was then heated to the requested temperature, kept at this temperature for 4 min., and then allowed to cool to approximately 150°C. The autoclave contents were removed from the inside. The remaining reaction products on the outside and inside of the catalyst were removed by pulverizing the catalyst tablets and extracting the powder with tetrahydrofurane. After removing the tetrahydrofurane by distillation, the residue was mixed with the main liquid reaction product from the autoclave. This product (the effluent) was separated in an aqueous phase and a hydrocarbon phase. The latter was analyzed for API, simulated distillation and metal content. The following results were obtained:
API: 28°
Nickel: 5ppm
Vanadium: 12ppm
Simulated distillation: more than 95% by weight was boiling below 524°C

### Comparative example

The same procedure as in the above example was followed, except for the addition of biomass in the form of sawdust. When opening the autoclave, it was observed that the catalyst was imbedded in a pitch-like substance. The liquid reaction product was analysed as above. The following results were obtained:
API: 10°
Nickel: 75ppm
Vanadium: 450ppm
Simulated distillation: Less than 35% by weight was boiling below 524°C

As demonstrated by the above examples, the yield of the product as well as the properties thereof are superior when using the process according to the invention.

In the following, it is understood that various other embodiments and modifications when carrying out the invention in the practice will be apparent to and can be readily made by those skilled in the art without departing from the scope and spirit of the invention described below. Accordingly, it is not intended that the scope of the claims appended hereto be limited to the exact description set forth above, but rather that the claims be construed as encompassing all of the features of patentable novelty which reside in the present invention, including all the features and embodiments which would be treated as equivalents thereof by those skilled in the art to which the invention pertains.

## Claims

1. A heterogeneous, catalytic process for the production of light hydrocarbons having an API gravity of at least 25°, and a content of metals of less than 10ppm from heavy hydrocarbons, comprising adding 5-50% by weight based on said heavy hydrocarbons of a biomass, treating said heavy hydrocarbons and biomass in critical or near-critical water at a pressure of from 220-300atm, and at a temperature from 340-380°C in a catalytic reactor (8), using as a catalyst an element from the periodic system group 4b, and an element from the periodic system group 1a.

2. The process according to claim 1, wherein the catalytic element from the periodic system group 4b is zirconium, and the catalytic element from the periodic system 1a preferably is potassium.

3. The process according to claims 1-2, wherein the catalytic element from the periodic system group 4b is zirconium dioxide.

4. The process according to claims 1-2, wherein the catalytic element from the periodic system group 1a is potassium carbonate.

5. The process according to claims 1-4, wherein the pressure of the near-critical water is from 220-245atm, and the temperature is from 350-375°C.

6. The process according to any of the preceding claims, wherein the biomass is any suitable biomass.

7. The process according any of the preceding claims, wherein the biomass is selected from the group comprising straw, such as barley straw, rice shells, corn silage, sludge, semi-liquid manure, and wood chips, in an amount from 5-20% by weight based on said heavy hydrocarbons.

8. The process according to any of the preceding claims, wherein potassium is added in an amount of from 0.1-10 % by weight based on the heavy hydrocarbon feed.

9. The process according to claim 8, wherein potassium is added in an amount from 0.5 -5% by weight based on the heavy hydrocarbon feed.

10. The process according to any of the preceding claims, wherein the heavy hydrocarbons and the required amount of biomass are mixed in a stirred tank (11) at a temperature of 100-140°C at ambient pressure, and pumped at a pressure of 225-250atm through lines (2), (4) in which the mixture of heavy hydrocarbon and biomass is combined and mixed with feed water being pumped at the same pressure, the combined mixture being heated to the requested reactor temperature of 370-380°C and then introduced into the reactor (8) having a fixed bed catalyst in the form of rings or another geometry, causing as little pressure difference across the fixed bed catalyst as possible, the fixed bed catalyst being an element from the periodic system group 4b, the other catalyst being an element from the periodic system group 1 a, which is introduced into said reactor (8) through said feed water, the hot effluent from the reactor being passed through one or more heat exchangers (3) for preheating the reactor feed and cooling the effluent, which is subjected to pressure reduction, and then final cooling and phase separation into an aqueous phase, which may be recirculated to the process wholly or in part with the feed water, and the product phase consisting mainly of lighter hydrocarbons.

11. The process according to claims 1-9, wherein the heavy hydrocarbons and the required amount of biomass are mixed in a stirred tank (11) at a temperature of 100-140°C at ambient pressure, and pumped at a pressure of 225-250atm through lines (2), (4), the mixture being heated to the requested reactor temperature of 370-380°C and then introduced into the reactor (8) having a fixed bed catalyst, in the form of rings or another geometry, causing as little pressure difference across the fixed bed catalyst as possible, the fixed bed catalyst being an element from the periodic system group 4b, the other catalyst being an element from the periodic system group 1a being introduced separately into said reactor (8) through said feed water being heated and pressurized to form a critical or near-critical phase, the hot effluent from the reactor being passed through one or more heat exchangers (3) for preheating the reactor feed and cooling the effluent, which is subjected to pressure reduction, and then final cooling and phase separation into an aqueous phase, which may be recirculated to the process wholly or in part with the feed water, and the product phase consisting mainly of lighter hydrocarbons.

12. The process according to claims 10 or 11, wherein the heavy hydrocarbons and the required amount of biomass are mixed in the stirred tank (11) at a temperature of 120°C at ambient pressure.

13. The process according to any of the preceding claims, wherein the reactor (8) is a continuous flow reactor.

## Patentansprüche

1. Heterogenes, katalytisches Verfahren zur Herstellung leichter Kohlenwasserstoffe, die eine API-Dichte von mindestens 25° und einen Metallgehalt von weniger als 10 ppm aus schweren Kohlenwasserstoffen aufweisen, umfassend Zugeben von 5-50 Gewichts-% basierend auf den schweren Kohlenwasserstoffen einer Biomasse, Behandeln der schweren Kohlenwasserstoffe und der Biomasse in kritischem oder nahe-kritischem Wasser bei einem Druck von 220-300 atm und bei einer Temperatur von 340-380 °C in einem katalytischen Reaktor (8) unter Verwendung eines Elements aus der Gruppe 4b des Periodensystems und eines Elements aus der Gruppe 1 a des Periodensystems als einen Katalysator.

2. Verfahren nach Anspruch 1, wobei das katalytische Element aus der Gruppe 4b des Periodensystems Zirconium ist und das katalytische Element aus dem Periodensystem 1 a bevorzugt Kalium ist.

3. Verfahren nach einem der Ansprüche 1-2, wobei das katalytische Element aus der Gruppe 4b des Periodensystems Zirconiumdioxid ist.

4. Verfahren nach einem der Ansprüche 1-2, wobei das katalytische Element aus der Gruppe 1 a des Periodensystems Kaliumcarbonat ist.

5. Verfahren nach einem der Ansprüche 1-4, wobei der Druck des nahe-kritischen Wassers von 220-245 atm ist und die Temperatur von 350-375 °C ist.

6. Verfahren nach einem der vorhergehenden Ansprüche, wobei die Biomasse jegliche geeignete Biomasse ist.

7. Verfahren nach einem der vorhergehenden Ansprüche, wobei die Biomasse ausgewählt ist aus der Gruppe umfassend Stroh wie beispielsweise Gerstenstroh, Reisschalen, Maissilage, Schlamm, halbflüssiger Dung und Holzschnitzel in einer Menge von 5-20 Gewichts-% basierend auf den schweren Kohlenwasserstoffen.

8. Verfahren nach einem der vorhergehenden Ansprüche, wobei Kalium in einer Menge von 0,1-10 Gewichts-% basierend auf der Einspeisung des schweren Kohlenwasserstoffs zugegeben wird.

9. Verfahren nach Anspruch 8, wobei Kalium in einer Menge von 0,5-5 Gewichts-% basierend auf der Einspeisung des schweren Kohlenwasserstoffs zugegeben wird.

10. Verfahren nach einem der vorhergehenden Ansprüche, wobei die schweren Kohlenwasserstoffe und die benötigte Menge an Biomasse in einem gerührten Kessel (11) bei einer Temperatur von 100-140 °C bei Umgebungsdruck vermischt werden und bei einem Druck von 225-250 atm durch Leitungen (2), (4) gepumpt werden, in denen die Mischung des schweren Kohlenwasserstoffs und der Biomasse kombiniert wird und mit Einspeisewasser, welches mit dem gleichen Druck gepumpt wird, vermischt wird, die kombinierte Mischung auf eine geforderte Reaktortemperatur von 370-380 °C erwärmt wird und dann in den Reaktor (8) eingebracht wird, der einen Festbett-Katalysator in Form von Ringen oder einer anderen Geometrie aufweist, wobei eine so klein wie mögliche Druckdifferenz über dem Festbett-Katalysator erzeugt wird, der Festbett-Katalysator ein Element aus der Gruppe 4b des Periodensystems ist, der andere Katalysator ein Element aus der Gruppe 1a des Periodensystems ist, welcher in den Reaktor (8) durch das Einspeisewasser eingebracht wird, der heiße Abfluss aus dem Reaktor durch einen oder mehrere Wärmetauscher (3) durchgeführt wird, um die Reaktoreinspeisung vorzuwärmen und den Abfluss zu kühlen, welcher dann Druckreduktion unterzogen wird und dann abschließendes Kühlen und Phasentrennung in eine wässrige Phase, welche dem Verfahren ganz oder teilweise mit dem Einspeisewasser wieder zugeführt werden kann und die Produktphase hauptsächlich aus leichteren Kohlenwasserstoffen besteht.

11. Verfahren nach einem der Ansprüche 1-9, wobei die schweren Kohlenwasserstoffe und die benötigte Menge an Biomasse in einem gerührten Kessel (11) bei einer Temperatur von 100-140 °C bei Umgebungsdruck vermischt werden und bei einem Druck von 225-250 atm durch Leitungen (2), (4) gepumpt werden, die Mischung auf eine geforderte Reaktortemperatur von 370-380 °C erwärmt wird und dann in den Reaktor (8) eingebracht wird, der einen Festbett-Katalysator in Form von Ringen oder einer anderen Geometrie aufweist, wobei eine so klein wie mögliche Druckdifferenz über dem Festbett-Katalysator erzeugt wird, der Festbett-Katalysator ein Element aus der Gruppe 4b des Periodensystems ist, der andere Katalysator ein Element aus der Gruppe 1a des Periodensystems ist, welcher separat in den Reaktor (8) durch das Einspeisewasser eingebracht wird, welches erwärmt wird und unter Druck gesetzt wird, um eine kritische oder nahe-kritische Phase zu bilden, der heiße Abfluss aus dem Reaktor durch einen oder mehrere Wärmetauscher (3) durchgeführt wird, um die Reaktoreinspeisung vorzuwärmen und den Abfluss zu kühlen, welcher dann Druckreduktion unterzogen wird und dann abschließendes Kühlen und Phasentrennung in eine wässrige Phase, welche dem Verfahren ganz oder teilweise mit dem Einspeisewasser wieder zugeführt werden kann und die Produktphase hauptsächlich aus leichteren Kohlenwasserstoffen besteht.

12. Verfahren nach einem der Ansprüche 10 oder 11, wobei die schweren Kohlenwasserstoffe und die benötigte Menge an Biomasse in einem gerührten Kessel (11) bei einer Temperatur von 120 °C bei Umgebungsdruck vermischt werden.

13. Verfahren nach einem der vorhergehenden Ansprüche, wobei der Reaktor (8) ein Durchflussreaktor ist.

## Revendications

1. Procédé catalytique hétérogène pour la production d'hydrocarbures légers ayant une densité API d'au moins 25°, et une teneur en métaux inférieure à 10 ppm à partir d'hydrocarbures lourds, comprenant l'addition de 5-50 % en poids sur la base desdits hydrocarbures lourds d'une biomasse, le traitement desdits hydrocarbures lourds et de ladite biomasse dans de l'eau critique ou sensiblement critique à une pression de 220-300 atm, et à une température de 340-380°C dans un réacteur catalytique (8), en utilisant comme catalyseur un élément provenant du groupe 4b du système périodique et un élément provenant du groupe la du système périodique.

2. Procédé selon la revendication 1 où l'élément catalytique provenant du groupe 4b du système périodique est le zirconium et l'élément catalytique provenant du groupe la du système périodique est de préférence le potassium.

3. Procédé selon les revendications 1-2 où l'élément catalytique provenant du groupe 4b du système périodique est le dioxyde de zirconium.

4. Procédé selon les revendications 1-2 où l'élément catalytique provenant du groupe la du système périodique est le carbonate de potassium.

5. Procédé selon les revendications 1-4 où la pression de l'eau sensiblement critique est de 220-245 atm et la température est de 350-375°C.

6. Procédé selon l'une quelconque des revendications précédentes où la biomasse est toute biomasse appropriée.

7. Procédé selon l'une quelconque des revendications précédentes où la biomasse est choisie dans le groupe comprenant la paille, comme la paille d'orge, les balles de riz, l'ensilage de maïs, les boues, le fumier semi liquide et les copeaux de bois, en une quantité de 5-20 % en poids sur la base desdits hydrocarbures lourds.

8. Procédé selon l'une quelconque des revendications précédentes où du potassium est ajouté en une quantité de 0,1-10 % en poids sur la base de l'alimentation d'hydrocarbures lourds.

9. Procédé selon la revendication 8 où du potassium est ajouté en une quantité de 0,5-5 % en poids sur la base de l'alimentation d'hydrocarbures lourds.

10. Procédé selon l'une quelconque des revendications précédentes où les hydrocarbures lourds et la quantité nécessaire de biomasse sont mélangés dans un réservoir agité (11) à une température de 100-140°C à la pression ambiante, et pompés à une pression de 225-250 atm dans les conduites (2), (4) dans lesquelles le mélange d'hydrocarbures lourds et de biomasse est combiné et mélangé avec de l'eau d'alimentation qui est pompée à la même pression, le mélange combiné étant chauffé à la température du réacteur nécessaire de 370-380°C puis introduit dans le réacteur (8) ayant un catalyseur en lit fixe sous forme d'anneaux ou d'une autre géométrie, en entraînant une différence de pression de part et d'autre du catalyseur en lit fixe la plus faible possible, le catalyseur en lit fixe étant un élément provenant du groupe 4b du système périodique, l'autre catalyseur étant un élément provenant du groupe la du système périodique, qui est introduit dans ledit réacteur (8) par ladite eau d'alimentation, l'effluent chaud provenant du réacteur étant amené à traverser un ou plusieurs échangeurs de chaleur (3) pour préchauffer l'alimentation du réacteur et refroidir l'effluent, qui est soumis à une réduction de la pression, puis un refroidissement final et une séparation des phases en une phase aqueuse, qui peut être recyclée dans le procédé en totalité ou en partie avec l'eau d'alimentation, et la phase de produit consistant principalement en hydrocarbures plus légers.

11. Procédé selon les revendications 1-9 où les hydrocarbures lourds et la quantité nécessaire de biomasse sont mélangés dans un réservoir agité (11) à une température de 100-140°C à la pression ambiante, et pompés à une pression de 225-250 atm dans les conduites (2), (4), le mélange étant chauffé à la température du réacteur nécessaire de 370-380°C puis introduit dans le réacteur (8) ayant un catalyseur en lit fixe, sous forme d'anneaux ou d'une autre géométrie, en entraînant une différence de pression de part et d'autre du catalyseur en lit fixe la plus faible possible, le catalyseur en lit fixe étant un élément provenant du groupe 4b du système périodique, l'autre catalyseur étant un élément provenant du groupe 1a du système périodique introduit séparément dans ledit réacteur (8) par ladite eau d'alimentation qui est chauffée et mise sous pression pour former une phase critique ou sensiblement critique, l'effluent chaud provenant du réacteur étant amené à traverser un ou plusieurs échangeurs de chaleur (3) pour préchauffer l'alimentation du réacteur et refroidir l'effluent, qui est soumis à une réduction de la pression, puis un refroidissement final et une séparation des phases en une phase aqueuse, qui peut être recyclée dans le procédé en totalité ou en partie avec l'eau d'alimentation, et la phase de produit consistant principalement en hydrocarbures plus légers.

12. Procédé selon la revendication 10 ou 11 où les hydrocarbures lourds et la quantité nécessaire de biomasse sont mélangés dans le réservoir agité (11) à une température de 120°C à la pression ambiante.

13. Procédé selon l'une quelconque des revendications précédentes où le réacteur (8) est un réacteur à flux continu.
